# EUROPÄISCHE PATENTANMELDUNG

(11) **EP 1 277 611 A1**
(43) Veröffentlichungstag der Anmeldung: **22.01.2003**
(21) Anmeldenummer: 02015440.7
(22) Anmeldetag: 11.07.2002
(51) Int. Cl.: B60N 2/36

(54) **Aussenscharnier für eine Rückenlehnenhalterung**

(30) Priorität: 11.07.2001 DE 10133707
(71) Anmelder: Ferd. von Hagen Söhne & Koch GmbH & Co. KG, 42329 Wuppertal (DE)
(72) Erfinder: Reimann, Ingo, 42579 Heiligenhaus (DE)
(74) Vertreter: Müller, Karl-Ernst, Dr., Dipl.-Ing.

(57) **Zusammenfassung**

Die Erfindung betrifft ein Außenscharnier zur schwenkbaren Halterung der Rückenlehne eines Fahrzeugsitzes an einem fahrzeugfesten Teil, wobei die Rückenlehne mittels eines Bolzens in das Scharnier einsteckbar ist, wobei vorgesehen ist, dass die zur Sicherung des Bolzens (10) vorgesehene Sperre (22) durch die Einsteckbewegung des Bolzens (10) wegbewegbar ist und sich bei eingerastetem Bolzen selbstsichernd vor die offene Seite der Lageröffnung legt.

## Beschreibung

Die Erfindung betrifft ein Außenscharnier zur schwenkbaren Halterung der Rückenlehne eines Fahrzeugsitzes an einem fahrzeugfesten Teil, bei welchem an der Rückenlehne ein die Drehachse für deren Verschwenkung bildender Bolzen befestigt ist und als fahrzeugfestes Teil ein eine einseitig offene Lageröffnung zum Einstecken des Bolzens bei der Montage der Rückenlehne und zur lagernden Aufnahme des Bolzens aufweisender Lagerbock vorgesehen ist, wobei an dem Lagerbock eine den Bolzen in seiner in die Lageröffnung eingedrückten Stellung mittels eines die offene Seite der Lageröffnung übergreifenden Hakens verriegelnde Sperre zwischen einer Freigabestellung und einer Verriegelungsposition schwenkbar angeordnet ist.

Ein Außenscharnier mit den vorgenannten Merkmalen ist in der DE 199 20 385 A1 beschrieben. Bei diesem Außenlager ist bereits eine Verbindung des an der Rückenlehne befestigten Bolzens mit einem am Fahrzeug befestigten Tragteil ohne zusätzliche Montageoperation dadurch ermöglicht, daß der Bolzen in einseitig offene Lageröffnungen des U-förmig ausgebildeten Tragteils eingedrückt wird und hier verrastet. Als Sicherung des Lagerbolzens in seiner in die Lageröffnungen eingedrückten Stellung ist an dem Tragteil eine Sperre zwischen einer Freigabestellung und einer Verriegelungsposition schwenkbar gelagert, die mit einem Haken die offene Seite der Lageröffnung übergreift, wenn der Lagerbolzen in die Lageröffnung eingedrückt ist, und so ein Herausgleiten des Lagerbolzens aus den Lageröffnungen verhindert. Die Sperre ist in ihre Verriegelungsposition mittels einer an dem Tragteil eingehängten Feder vorgespannt, wobei bei der Montage der Rückenlehne der Lagerbolzen mittels einer auf der Außenseite des Hakens angeordneten Anlaufschräge die Sperre entgegen der Federwirkung in deren Freigabestellung wegdrücken muß, bevor nach Eintritt des Bolzens in die Lageröffnungen die Sperre unter Federwirkung in ihre Verriegelungsposition zurückschnappt.

Mit der bekannten Anordnung ist der Nachteil verbunden, daß die Sicherheit der Bolzenverriegelung von der Funktion der eingesetzten Feder abhängig ist; kommt es bei einer Beanspruchung der Rückenlehne zu einem Federbruch oder einem Herausspringen der Feder aus ihrer Verankerung, so kann die Sperre ihre Sicherungsfunktion nicht mehr ausüben. Es kommt hinzu, daß bei der Montage der Rückenlehne die Feder durch das Verschwenken der Sperre in deren Freigabestellung stark beansprucht wird, womit auch ein entsprechender Kraftaufwand bei der Montage verbunden ist. Schließlich bedeutet die notwendige Feder ein zusätzliches Bauteil, welche den Aufwand für die Herstellung bzw. die Montage des Außenscharniers erhöht.

Der Erfindung liegt daher die Aufgabe zugrunde, ein Außenscharnier mit den gattungsgemäßen Merkmalen in seiner Funktion zu verbessern und den Aufbau des Außenscharniers und die Montage der Rückenlehne zu vereinfachen.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß die Sperre einen in ihrer Freigabestellung in die Lageröffnung des Lagerbocks derart hineinragenden Ansatz aufweist, daß beim Einführen des Bolzens in die Lageröffnung des Lagerbocks der Bolzen durch Druck auf den Ansatz die Sperre verschwenkt, bis ihr Haken die offene Seite der Lageröffnung übergreift und in dieser Verriegelungsposition der Sperre deren Ansatz außerhalb der Lageröffnung liegt, und daß die dem Bolzen zugewandte Innenfläche des Hakens derart ausgerichtet ist, daß sie mit ihrem in der Verriegelungsposition der Sperre dem Drehpunkt der Sperre bezüglich der Einführachse der Lageröffnung gegenüberliegenden Bereich mit der Einführachse der Lageröffnung einen Schließwinkel von weniger als 90 Grad bildet.

Mit der erfindungsgemäßen Ausgestaltung ist zunächst der Vorteil verbunden, daß die offene Seite der Lageröffnung für die Montage der Rückenlehne frei liegt, so daß dem Einstecken des Bolzens in den Lagerbock kein Widerstand entgegengesetzt wird. Ist der Lagerbolzen während der Montage in der Lageröffnung bereits fixiert, erfolgt durch den von dem Bolzen ausgeübten Druck auf den Ansatz der Sperre zwangsgeführt eine Verschwenkung der Sperre, bis die Sperre ihre vollständige Verriegelungsposition erreicht hat. Aufgrund der besonderen Ausrichtung der Innenfläche des Hakens ist eine selbsttätige Öffnung der Sperre durch eine entsprechende Zugbelastung an dem Bolzen bzw. an der Rückenlehne ausgeschlossen, so daß keine gesonderten Sicherungsmittel erforderlich ist. Somit ist für die gesicherte Befestigung der Rückenlehne an dem Lagerbock als bewegliches Teil nur die drehbare Sperre als unverlierbares Bauteil erforderlich, so daß auf weitere den Herstellungsund Montageaufwand erhöhende zusätzliche Bauteile in vorteilhafter Weise verzichtet ist.

Soweit nach einem Ausführungsbeispiel der Erfindung vorgesehen ist, daß der Haken'der Sperre mit seinem freien Vorderende in der Verriegelungsposition der Sperre eine an dem Lagerbock befindliche Sicherungsnase untergreift und sich unter Last bis zur Anlage an der Sicherungsnase aufbiegt, ist hiermit der Vorteil verbunden, daß die Funktionssicherheit der Sperre im Belastungsfall weiter vergrößert ist. Sollte ein derartiger Lastfall auftreten, daß sich die Sperre verformt, so kann sich der Haken allenfalls bis zur Anlage an der Sicherungsnase aufbiegen. Bevor eine solche Verformung eintritt, ist allerdings der Haken gegenüber der Sicherungsnase freigängig, so daß auch eine Demontage des Außenscharniers mittels eines entsprechenden, an der Sperre anzusetzenden Werkzeuges möglich ist, indem die Sperre von der Verriegelungsposition in die Freigabestellung aktiv zurückverschwenkt wird.

Nach einem Ausführungsbeispiel der Erfindung ist es zweckmäßig, wenn die Lageröffnung aus einem eine teilkreisförmige Kontur aufweisenden Lagerbereich und einem davon abgehenden Einführschlitz mit einer gegenüber dem Durchmesser des Lagerbereichs geringer ausgelegten Breite besteht, wobei vorgesehen sein kann, daß der Lagerbereich der Lageröffnung mit einem sich über die teilkreisförmige Kontur erstreckenden Gleitlagersegment versehen ist.

Soweit bei der gattungsbildenden DE 199 20 385 der Bolzen in einer umständlichen Weise in einer U-förmigen, an der Rückenlehnenstruktur befestigten Lagergabel gehaltert ist, ist zur weiteren Vereinfachung nach einem Ausführungsbeispiel der Erfindung vorgesehen, daß der Bolzen von der Rückenlehnenstruktur frei abragend an der Rückenlehne befestigt ist und an seinem äußeren freien Ende eine kreisförmige Verbreiterung mit einem größeren Durchmesser als der Durchmesser des Lagerbereichs der Lageröffnung aufweist. Eine derartige Bolzengestaltung ist aus der DE 196 01 367 A1 an sich bekannt.

Nach einem Ausführungsbeispiel der Erfindung ist vorgesehen, daß der Bolzen in seinem in den Lagerbock eintretenden Bereich einen Querschnitt mit zwei einander gegenüberliegenden parallelen Abflachungen und zwei davon jeweils eingeschlossenen konvexen Lagerflächen aufweist, wobei der Radius der konvexen Lagerflächen des Bolzens dem Radius des in der Lageröffnung ausgebildeten Lagerbereichs entspricht; hiermit ist eine Drehlagerung des Bolzens in dem Lagerbereich des Lagerbocks gewährleistet.

Es kann vorgesehen sein, daß der Abstand der Abflachungen des Bolzens geringer bemessen ist als die Breite des Einführschlitzes.

In einem Ausführungsbeispiel der Erfindung ist vorgesehen, daß der Lagerbock U-förmig mit zwei jeweils eine Lageröffnung aufweisenden Schenkeln ausgebildet und die drehbare Sperre zwischen den beiden U-Schenkeln des Lagerbocks angeordnet ist.

In der Zeichnung ist ein Ausführungsbeispiel der Erfindung wiedergegeben, welches nachstehend beschrieben ist. Es zeigen:
- Fig. 1: ein Außenscharnier mit Bolzen und Lagerbock in Einzeldarstellung vor der Montage,
- Fig. 2: den Gegenstand der Figur 1 nach der Montage des Außenscharniers.

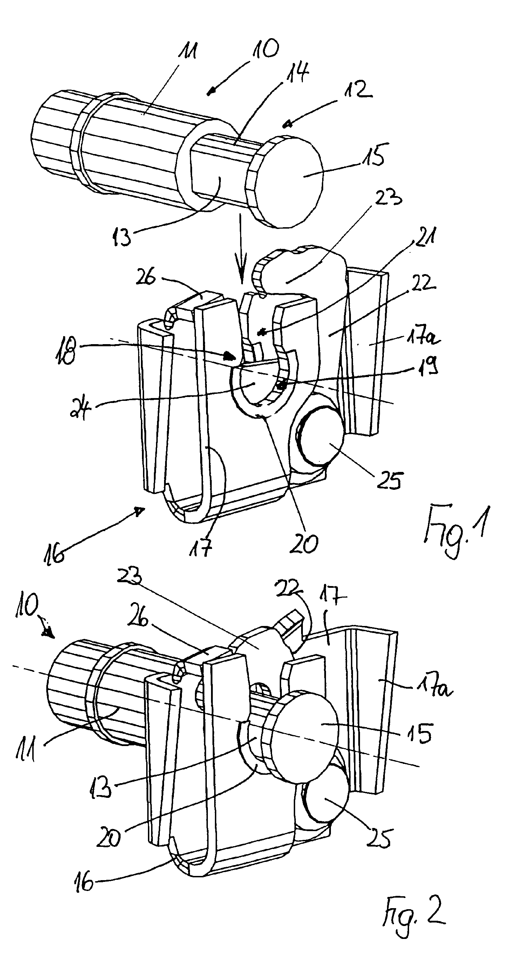

Der aus Figur 1 zunächst ersichtliche Bolzen 10 ist mit seinem Schaft 11 in an sich bekannter Weise an einer nicht weiter dargestellten Rückenlehne befestigt, und er weist einen frei abragenden Bereich 12 auf, mit welchem der Bolzen 10 in Eingriff mit dem noch zu beschreibenden Lagerbock 16 des Außenscharniers zu bringen ist. In dem Bereich 12 weist der Bolzen 10 zwei einander gegenüberliegende parallele Abflachungen 13 auf, die zwischen sich jeweils konvexe Lagerflächen 14 einschließen. An seinem äußeren Ende ist der Bolzen 10 mit einer Verbreiterung 15 als Sicherung gegen Axialverschiebung versehen, wie noch zu beschreiben ist.

Der weiterhin aus Figur 1 ersichtliche Lagerbock 16 ist U-förmig mit U-Schenkeln 17 ausgebildet, wobei an einem U-Schenkel 17 mit dem Bezugszeichen 17a angedeutet ist, daß der betreffende U-Schenkel einstückig in einen im einzelnen nicht dargestellten Befestigungswinkel übergehen kann, mittels dessen der Lagerbock 16 an der Fahrzeugkarosserie zu befestigen ist.

In beiden U-Schenkeln 17 ist jeweils miteinander fluchtend eine Lageröffnung 18 ausgebildet, die aus einem eine teilkreisförmige Kontur aufweisenden Lagerbereich 19 und einem Einführschlitz 21 besteht. Der Lagerbereich 19 ist mit einem Gleitlagersegment 20 versehen.

Aus der Zusammenschau von Bolzen 10 und Lagerbock 16 ergibt sich, daß der Bolzen mit seinen Abflachungen 13 in den Einführschlitz 21 der Lageröffnungen 18 einsteckbar ist, wozu der Abstand der Abflachungen 13 etwas geringer bemessen ist als die Breite des Einführschlitzes 21. Der Bolzen 10 wird in die Lageröffnungen 18 eingedrückt, bis seine konvexen Lagerflächen 14 in dem Lagerbereich 19 mit Gleitlagersegment 20 anliegen, so daß aufgrund des übereinstimmend festgelegten Radius von Lagerflächen 14 und Lagerbereich 19 eine Drehlagerung des Bolzens 10 in den Lageröffnungen 18 verwirklicht ist. Auf diese Weise bildet der Bolzen 10 die Drehachse für die Verschwenkung der Rückenlehne bezüglich des ortsfest angebrachten Lagerbocks 16. Da die Verbreiterung 15 des Bolzens 10 einen größeren Durchmesser als der Lagerbereich 19 aufweist, ist hierdurch eine axiale Sicherung des Bolzens 10 in der Lageröffnung 18 gegeben.

Zur Sicherung des Bolzens 10 in seiner Lage in den Lageröffnungen 18 ist exzentrisch zu den Lageröffnungen 18 an dem Lagerbock 16 eine Sperre 22 um eine Drehachse 25 schwenkbar gelagert, wobei in Figur 1 die Freigabestellung der Sperre 22 und in Figur 2 die Verriegelungsposition der Sperre 22 dargestellt sind. Die Sperre 22 weist einerseits einen in ihrer Verriegelungsposition den Einführschlitz 21 übergreifenden Haken 23 und andererseits einen in der in Figur 1 dargestellten Freigabeposition in den Lagerbereich 19 reichenden Ansatz 24 auf.

Aus dieser Anordnung ergibt sich, daß beim Einstecken des Bolzens 10 in die Lageröffnungen 18 der Bolzen durch Druck auf den Ansatz 24 der Sperre 22 die Sperre 22 über den Einsteckweg in die in Figur 2 dargestellte Verriegelungsposition verschwenkt, in welcher der Haken 23 den Einführschlitz 21 vollständig übergreift und der Ansatz 24 außerhalb des Lagerbereichs 19 der Lageröffnungen 18 liegt. Hierbei erweist es sich als vorteilhaft, daß der Einführschlitz 21 bei Beginn der Montage zum Einführen des mit den Abflachungen 13 versehenen Bereichs des Bolzens 10 zur Verfügung steht und die Druckkraft auf den Bolzen erst dann ausgeübt werden muß, wenn der Bolzen in der Lageröffnung 18 bereits vorfixiert und geführt ist.

Es ist der Zeichnung zu entnehmen, daß die dem Bolzen 10 zugewandte Innenfläche des Hakens 23 der Sperre 22 derart ausgerichtet ist, daß sie mit ihrem in der Verriegelungsposition der Sperre 22 (Figur 2) dem Drehpunkt 25 der Sperre 22 bezüglich der Einführachse des Bolzens 10 in den Einführschlitz 21 gegenüberliegenden Bereich mit der als Mittenlängsachse des Einführschlitzes 21 anzusprechenden Einführachse einen Schließwinkel von weniger als 90 Grad bildet, so daß aufgrund dieser Zuordnung eine Selbstöffnung der Sperre 22 unter Last vermieden ist.

Eine zusätzliche Sicherung ist dadurch gegeben, daß an dem Lagerbock 16 eine den Zwischenraum zwischen seinen U-Schenkeln 17 übergreifende Sicherungsnase 26 ausgebildet ist, unter welche das vordere Ende des Hakens 23 in der Verriegelungsposition der Sperre 22 derart greift, daß ohne eine auftretende Last die Sperre 22 zwischen der Verriegelungsposition (Figur 2) und der Freigabestellung (Figur 1) mittels eines Werkzeuges verschwenkbar ist, so daß dadurch die Demontage des Außenscharniers ermöglicht ist. Kommt dagegen aufgrund einer auf die Rückenlehne einwirkenden hohen Last der Haken 23 unter eine entsprechende, von dem Bolzen 10 ausgehende Beanspruchung, so biegt sich der Haken 23 unter leichter Verformung bis zur Anlage seines vorderen Endes an der Sicherungsnase 23 auf, und in dieser Stellung ist eine weitere Öffnung der Sperre 22 sicher vermieden.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

## Patentansprüche

1. Außenscharnier zur schwenkbaren Halterung der Rückenlehne eines Fahrzeugsitzes an einem fahrzeugfesten Teil, bei welchem an der Rückenlehne ein die Drehachse für deren Verschwenkung bildender Bolzen befestigt ist und als fahrzeugfestes Teil ein eine einseitig offene Lageröffnung zum Einstecken des Bolzens bei der Montage der Rückenlehne und zur lagernden Aufnahme des Bolzens aufweisender Lagerbock vorgesehen ist, wobei an dem Lagerbock eine den Bolzen in seiner in die Lageröffnung eingedrückten Stellung mittels eines die offene Seite der Lageröffnung übergreifenden Hakens verriegelnde Sperre zwischen einer Freigabestellung und einer Verriegelungsposition schwenkbar angeordnet ist, **dadurch gekennzeichnet, daß** die Sperre (22) einen in ihrer Freigabestellung in die Lageröffnung (Lagerbereich 19) des Lagerbocks (16) derart hineinragenden Ansatz (24) aufweist, daß beim Einführen des Bolzens (10) in die Lageröffnung (18) des Lagerbocks (16) der Bolzen (10) durch Druck auf den Ansatz (24) die Sperre (22) verschwenkt, bis ihr Haken (23) die offene Seite der Lageröffnung übergreift und in dieser Verriegelungsposition der Sperre (22) deren Ansatz (24) außerhalb der Lageröffnung (18) liegt, und daß die dem Bolzen (10) zugewandte Innenfläche des Hakens (23) derart ausgerichtet ist, daß sie mit ihrem in der Verriegelungsposition der Sperre (22) dem Drehpunkt (25) der Sperre (22) bezüglich der Einführachse der Lageröffnung (18) gegenüberliegenden Bereich mit der Einführachse der Lageröffnung (18) einen Schließwinkel von weniger als 90 Grad bildet.

2. Außenscharnier nach Anspruch 1, **dadurch gekennzeichnet, daß** der Haken (23) der Sperre (22) mit seinem freien Vorderende in der Verriegelungsposition der Sperre (22) eine an dem Lagerbock (16) befindliche Sicherungsnase (26) untergreift und sich unter Last bis zur Anlage an der Sicherungsnase (26) aufbiegt.

3. Außenscharnier nach Anspruch 1 oder 2, **dadurch gekennzeichnet, daß** die Lageröffnung aus einem eine teilkreisförmige Kontur aufweisenden Lagerbereich (19) und einem davon abgehenden Einführschlitz (21) mit einer gegenüber dem Durchmesser des Lagerbereichs (19) geringer ausgelegten Breite besteht.

4. Außenscharnier nach Anspruch 3, **dadurch gekennzeichnet, daß** der Lagerbereich (19) der Lageröffnung (18) mit einem sich über die teilkreisförmige Kontur erstreckenden Gleitlagersegment (20) versehen ist.

5. Außenscharnier nach einem der Ansprüche 1 bis 4, **dadurch gekennzeichnet, daß** der Bolzen (10) von der Rückenlehnenstruktur frei abragend an der Rückenlehne befestigt ist und an seinem äußeren freien Ende eine kreisförmige Verbreiterung (15) mit einem größeren Durchmesser als der Durchmesser des Lagerbereichs (19) der Lageröffnung (18) aufweist.

6. Außenscharnier nach einem der Ansprüche 1 bis 5, **dadurch gekennzeichnet, daß** der Bolzen (10) in seinem in den Lagerbock (16) eintretenden Bereich einen Querschnitt mit zwei einander gegenüberliegenden parallelen Abflachungen (13) und zwei davon jeweils eingeschlossenen konvexen Lagerflächen (14) aufweist.

7. Außenscharnier nach Anspruch 6, **dadurch gekennzeichnet, daß** der Radius der konvexen Lagerflächen (14) des Bolzens (10) dem Radius des in der Lageröffnung (18) ausgebildeten Lagerbereichs (19) entspricht.

8. Außenscharnier nach einem der Ansprüche 5 bis 7, **dadurch gekennzeichnet, daß** der Abstand der Abflachungen (13) des Bolzens (10) geringer bemessen ist als die Breite des Einführschlitzes (21).

9. Außenscharnier nach einem der Ansprüche 1 bis 8, **dadurch gekennzeichnet, daß** der Lagerbock (16) U-förmig mit zwei jeweils eine Lageröffnung (18, 19, 21) aufweisenden Schenkeln (17) ausgebildet und die drehbare Sperre (22) zwischen den beiden U-Schenkeln (17) des Lagerbocks (16) angeordnet ist.
